(19) Europäisches Patentamt
European Patent Office
Office européen des brevets

(11) **EP 2 613 331 B1**

(12) **FASCICULE DE BREVET EUROPEEN**

(45) Date de publication et mention de la délivrance du brevet:
**16.05.2018 Bulletin 2018/20**

(51) Int Cl.:
*H01G 11/38* (2013.01)   *H01G 11/48* (2013.01)
*H01G 11/86* (2013.01)

(21) Numéro de dépôt: **13150139.7**

(22) Date de dépôt: **03.01.2013**

(54) **Composition carbonée pour électrode de cellule de supercondensateur, électrode, son procédé de fabrication et cellule l'incorporant.**

Kohlenstoffhaltige Zusammensetzung für Elektrode einer Superkondensatorzelle, Elektrode, ihr Herstellungsverfahren und sie umfassende Zelle

Carbonaceous composition for supercapacitor cell electrode, electrode, method for manufacturing same and cell including same

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.01.2012 FR 1250171**

(43) Date de publication de la demande:
**10.07.2013 Bulletin 2013/28**

(73) Titulaire: **Hutchinson**
**75008 Paris (FR)**

(72) Inventeurs:
 • **Dufour, Bruno**
 **77430 Champagne Sur Seine (FR)**
 • **Ayme-Perrot, David**
 **68330 Huningue (FR)**
 • **Dieudonné, Marie**
 **12210 Laguiole (FR)**
 • **Sonntag, Philippe**
 **77210 Avon (FR)**

(74) Mandataire: **Cabinet Plasseraud**
 **66, rue de la Chaussée d'Antin**
 **75440 Paris Cedex 09 (FR)**

(56) Documents cités:
| EP-A1- 1 791 199 | EP-A1- 2 071 651 |
| EP-A2- 1 225 647 | GB-A- 2 470 190 |
| JP-A- 2007 042 285 | JP-A- 2010 123 842 |
| JP-A- 2010 171 211 | JP-A- 2010 171 213 |
| US-A1- 2004 130 038 | US-B2- 7 867 291 |

**Description**

La présente invention concerne une composition carbonée utilisable pour constituer une électrode de cellule de supercondensateur, une électrode poreuse utilisable pour équiper une telle cellule, un procédé de fabrication de cette électrode et une telle cellule incorporant au moins une telle électrode. L'invention s'applique notamment, mais pas exclusivement, à des supercondensateurs adaptés pour équiper des véhicules électriques.

Les supercondensateurs sont des systèmes de stockage d'énergie électrique particulièrement intéressants pour les applications nécessitant de véhiculer de l'énergie électrique à forte puissance. Leur aptitude à des charges et décharges rapides, leur durée de vie accrue par rapport à une batterie à puissance élevée en font des candidats prometteurs pour nombre d'applications. Les supercondensateurs consistent généralement en l'association de deux électrodes poreuses conductrices à haute surface spécifique, immergées dans un électrolyte ionique et séparées par une membrane isolante appelé « séparateur », lequel permet la conductivité ionique et évite le contact électrique entre les électrodes. Chaque électrode est en contact avec un collecteur métallique permettant l'échange du courant électrique avec un système extérieur. Sous l'influence d'une différence de potentiel appliquée entre les deux électrodes, les ions présents au sein de l'électrolyte sont attirés par la surface d'électrode présentant une charge opposée, formant ainsi une double couche électrochimique à l'interface de chaque électrode. L'énergie électrique est ainsi stockée de manière électrostatique par séparation des charges. L'expression de la capacité C d'un supercondensateur est identique à celle d'un condensateur classique, soit :

$$C = \varepsilon.S/e, \text{ où } \varepsilon \text{ désigne la permittivité du milieu, S la surface}$$

où $\varepsilon$ désigne la permittivité du milieu, S la surface occupée par la double couche, et e l'épaisseur de la double couche.

Les capacités atteignables au sein de supercondensateurs sont néanmoins beaucoup plus élevées que celles communément atteintes par des condensateurs classiques, du fait de l'utilisation d'électrodes carbonées à surface spécifique maximisée et de l'extrême finesse de la double couche électrochimique (typiquement de quelques nanomètres d'épaisseur). Ces électrodes carbonées doivent nécessairement être conductrices afin d'assurer le transport des charges électriques, poreuses afin d'assurer le transport des charges ioniques et la formation de la double couche électrique sur une grande surface, et chimiquement inertes pour éviter toute réaction parasite consommatrice d'énergie.

L'énergie stockée E au sein d'un supercondensateur est définie selon l'expression classique des condensateurs, soit:

$$E = 1/2. \, C.V^2, \text{ où } V \text{ est le potentiel de la supercapacité.}$$

où V est le potentiel de la supercapacité.

La capacité et le potentiel sont donc deux paramètres essentiels qu'il est nécessaire d'optimiser pour favoriser les performances énergétiques. La capacité dépend de la texture poreuse réellement accessible par l'électrolyte. Or, pour des applications dans le transport et notamment pour un véhicule électrique, il est nécessaire de disposer d'une densité d'énergie élevée pour limiter la masse embarquée du supercondensateur, ce qui impose d'avoir une capacité massique élevée.

Le potentiel d'un supercondensateur dépend principalement de la nature de l'électrolyte utilisé et notamment de sa stabilité électrochimique, étant précisé qu'il existe deux grandes familles d'électrolytes qui sont les électrolytes organiques et aqueux.

Les électrolytes organiques sont à base d'un sel organique (typiquement un sel d'ammonium quaternaire) dispersé dans un solvant organique. Si certains électrolytes organiques permettent d'atteindre un potentiel de fonctionnement de 2,7 V, les électrolytes organiques présentent l'inconvénient d'être chers, inflammables, toxiques et potentiellement polluants, posant ainsi des problèmes de sécurité pour une utilisation dans un véhicule.

Les électrolytes aqueux sont au contraire peu chers et non inflammables, ce qui les rend attrayants pour certaines applications. Le potentiel applicable avec ces électrolytes est limité au domaine de stabilité de l'eau, de l'ordre de 1,2 V. Parmi les électrolytes aqueux utilisables dans un supercondensateur, on peut par exemple citer des solutions aqueuses d'acide sulfurique, de chlorure de potassium, de sulfate de potassium ou d'autres sels en milieu acide, basique ou neutre.

Pour pouvoir atteindre un fonctionnement avec de fortes puissances, la résistance au passage du courant dans le système doit être très faible. En effet, cette résistance, qui est la somme des résistances des différents composants du système et notamment la résistance de l'électrolyte, et celle des collecteurs de courant, engendre des pertes par effet Joule qui diminuent le rendement du supercondensateur. Une contribution importante est la résistance de l'interface entre le collecteur de courant métallique et la matière active carbonée de l'électrode, qui est dépendante de la qualité et de la nature du contact. Il est donc nécessaire d'utiliser une électrode possédant une bonne adhésion avec les métaux utilisés pour les collecteurs afin d'améliorer le contact électrique.

Il existe actuellement plusieurs techniques pour la préparation et la mise en oeuvre d'électrodes à base de poudre de carbone pour supercondensateurs fonctionnant avec un électrolyte ionique aqueux.

Une première technique par exemple décrite dans les documents US-A1-2007/0146967, US-B2-7 811 337, EP-A1-1 255 261, US-A1-2006/0000071, US-B2-7 316 864, US-A1-2011/0176255 et US-A1-2009/0110806, consiste à disperser la poudre de carbone avec un liant hydrophobe dans un solvant ou monomère organique, à enduire la composition sur un collecteur de courant puis à évaporer ce solvant ou à polymériser ce monomère. Un exemple typique de liant hydrophobe utilisé est le poly(difluorure de vinyl) (PVDF) mis en oeuvre dans la N-méthyl-2-pyrrolidinone (NMP). Cette technique présente l'inconvénient d'utiliser des produits toxiques et de dégager des composés organiques volatils (« COV » en abrégé). De plus, le liant ne pouvant gonfler par l'électrolyte aqueux, il est nécessaire d'avoir une importante macroporosité de l'électrode pour permettre la diffusion de cet électrolyte dans l'électrode, ce qui fragilise mécaniquement l'électrode et ne permet pas de disposer d'une capacité maximale.

Une autre technique consiste à utiliser un liant hydrophobe, tel qu'un latex dans de l'eau. Cette technique, par exemple décrite dans les documents US-B1-6356 432, US-A1-2010/0304270 ou JP-A1-11-162794, permet d'éviter le dégagement de solvant organique mais ne permet pas une diffusion et un échange optimaux de l'électrolyte dans l'électrode, ce qui ne conduit pas à une capacité optimale pour l'électrode.

Le document US-A1-2009/0325069 présente une autre technique qui consiste à utiliser des systèmes liants hydrophiles mis en oeuvre en milieu aqueux, mais le seul électrolyte testé dans ce document en relation avec les électrodes fabriquées au moyen de ce système est un électrolyte organique (voir § [0180]) constitué de tétrafluoroborate d'éthylammonium dissous dans du carbonate de propylène. Les systèmes liants testés dans ce document sont à base d'un copolymère (propylène-éthylène) ou (propylène-butène-éthylène) modifié par de l'anhydride maléique, et comprennent en outre de la N,N-diméthyléthanolamine (DMEA) ou de la triéthylamine (TEA) à titre de composé basique. Ces systèmes sont préparés en utilisant un solvant organique constitué de n-propanol ou de tétrahydrofuranne, et comprennent optionnellement un tensioactif réactif.

Un inconvénient majeur d'un tel système liant hydrophile réside dans sa dissolution dans l'eau d'un électrolyte spécifiquement aqueux.

JP2010123842 et JP2010171211 divulgue des compositions pour électrode de supercondensateur à base de deux carbones actifs comprenant un liant á base de polyméres d'acrylate et de diéne et un agent dispersant. Un but de la présente invention est de proposer une composition à base d'une poudre carbonée apte à stocker et à restituer de l'énergie électrique qui soit utilisable pour constituer une électrode pour cellule de supercondensateur en contact avec un électrolyte ionique aqueux, composition qui permette de remédier à l'ensemble des inconvénients précités tout en procurant une bonne adhésion de l'électrode déposée sur un collecteur de courant métallique et sans pénaliser les propriétés mécaniques de l'électrode après remplissage par l'électrolyte aqueux en évitant toute re-dissolution du système formant liant et toute fissuration de l'électrode due à un gonflement mal contrôlé de ce système après remplissage de la cellule par cet électrolyte.

Ce but est atteint en ce que la Demanderesse vient de découvrir d'une manière surprenante que la combinaison, selon une fraction massique dans la composition comprise entre 3 et 10 %, d'au moins un premier polymère de masse moléculaire moyenne en nombre Mn supérieure à 1000 g/mol et comprenant des groupements alcools et, selon une fraction massique dans la composition comprise entre 0,3 et 3 %, d'au moins un second polymère d'au moins un acide et qui présente un pKa compris entre 0 et 6 et une masse moléculaire Mn supérieure à 500 g/mol, permet d'obtenir un système formant liant hydrophile pour cette composition dans lequel ledit au moins un premier polymère est réticulé à chaud en présence dudit au moins un second polymère après dispersion de la poudre carbonée et du système dans de l'eau, enduction de la dispersion obtenue sur le collecteur puis évaporation de l'eau.

On notera que l'électrode à base de la composition de l'invention (laquelle composition constitue ainsi un produit final directement utilisable après cette réticulation pour constituer cette électrode) ne se fissure pas après remplissage de la cellule par l'électrolyte ionique aqueux, par exemple à base d'acide sulfurique, et que le système formant liant de l'invention permet non seulement de préparer la composition exclusivement dans de l'eau ce qui évite l'emploi de solvants organiques potentiellement toxiques et le dégagement de composés organiques volatils, mais encore d'améliorer la capacité spécifique de l'électrode en milieu acide.

De préférence, ledit au moins un premier polymère présente une masse moléculaire moyenne en nombre Mn supérieure à 10000 g/mol et est un polymère d'un ester au moins partiellement hydrolysé de type poly(vinyl acétate).

A titre encore plus préférentiel, le(s)dit(s) premier(s) polymère(s) est (sont) choisi(s) dans le groupe constitué par les alcools polyvinyliques (PVA), les poly(hydroxyéthyl acrylate), les poly(hydroxyéthyl méthacrylate) et leurs mélanges.

Avantageusement, le(s)dit(s) premier(s) polymère(s) peu(ven)t être présent(s) dans la composition selon une fraction massique comprise entre 4 et 8 %.

Egalement à titre préférentiel, le(s)dit(s) acide(s) est (sont) choisi(s) dans le groupe constitué par les acides carboxyliques, sulfoniques et phosphoniques et leurs mélanges, ledit au moins un second polymère présentant un pKa compris entre 2 et 5 et une masse moléculaire moyenne en nombre Mn supérieure à 2000 g/mol.

A titre encore plus préférentiel, le(s)dit(s) second(s) polymère(s) est (sont) choisi(s) dans le groupe constitué par les poly(acide acrylique), les poly(acide méthacrylique), les poly(styrène-acide sulfonique), les poly(2-acrylamido-2méthyl-1propane acide sulfonique), les copolymères(éthylène-acide maléique), les copolymères(styrène-acide maléique), les copolymères(acide styrène-sulfonique - acide maléique), les poly(acide hydroxybutyrique), les poly(vinyl-acide sulfonique), les poly(vinyl-acide phosphonique) et leurs mélanges.

Avantageusement, le(s)dit(s) second(s) polymère(s) peu(ven)t être présent(s) dans la composition selon une fraction massique comprise entre 0,4 et 2 %.

Selon un exemple particulièrement avantageux de réalisation de l'invention, ledit système formant liant comprend en combinaison un alcool polyvinylique à titre de premier polymère et un poly(acide acrylique) à titre de second polymère.

Avantageusement, ledit système formant liant peut comprendre en outre un dérivé cellulosique de masse moléculaire moyenne en nombre Mn supérieure à 10000 g/mol et/ou un sel de l'acide alginique, présent(s) dans la composition selon une fraction massique comprise entre 0,1 et 1 %, de préférence comprise entre 0,2 et 0,5 %.

Selon l'invention, ledit système formant liant peut par exemple comprendre de la carboxyméthylcellulose à titre de dérivé cellulosique et/ou un alginate de sodium à titre de sel de l'acide alginique.

La poudre carbonée de la composition selon l'invention peut avantageusement comprendre :

- selon une fraction massique dans la composition comprise entre 80 et 86 %, au moins un carbone broyé de surface spécifique égale ou supérieure à 100 m$^2$/g et de préférence comprise entre 200 et 2000 m$^2$/g, et
- selon une fraction massique dans la composition comprise entre 10 et 11 %, au moins un noir de carbone de surface spécifique inférieure ou égale à 100 m$^2$/g par exemple de dénomination « Super-PLi » ou du carbone actif sous une autre forme comme par exemple des nanotubes de carbone et/ou du graphite, pour améliorer la conductivité électrique de la poudre carbonée.

Une électrode poreuse selon l'invention est utilisable pour équiper une cellule de supercondensateur en étant immergée dans un électrolyte ionique aqueux, et cette électrode est constituée d'une composition telle que définie ci-dessus qui recouvre un collecteur de courant métallique équipant l'électrode, laquelle électrode présente une épaisseur de préférence comprise entre 200 $\mu$m et 400 $\mu$m.

Un procédé selon l'invention pour fabriquer une telle électrode comprend essentiellement :

a) une dispersion dans de l'eau de ladite poudre carbonée et dudit système formant liant qui comprend ledit au moins un premier polymère non réticulé et ledit au moins un second polymère,
b) une enduction de la dispersion obtenue sur un feuillard métallique formant ledit collecteur,
c) une évaporation de l'eau contenue dans cette dispersion, de préférence à une température comprise entre 35 et 45 ° C, puis
d) une réticulation à chaud dudit au moins un premier polymère qui est catalysée par ledit au moins un second polymère et qui est de préférence réalisée à une température comprise entre 130 et 150° C.

Avantageusement, le taux massique de matière solide dans la dispersion de l'étape a) peut être compris entre 35 et 45 %, et l'on peut utiliser pour cette dispersion un alcool polyvinylique à titre de premier polymère et un poly(acide acrylique) à titre de second polymère.

Egalement avantageusement, l'on peut disperser en outre dans l'eau à l'étape a) un dérivé cellulosique de masse moléculaire moyenne en nombre Mn supérieure à 10000 g/mol, de préférence de la carboxyméthylcellulose, et/ou un sel de l'acide alginique, de préférence un alginate de sodium, ce dérivé cellulosique et/ou ce sel étant également réticulé(s) à chaud à l'étape d) en présence dudit au moins un second polymère.

Une cellule selon l'invention de supercondensateur comprend au moins deux électrodes poreuses supérieure et inférieure, une membrane électriquement isolante séparant ces électrodes l'une de l'autre et un électrolyte ionique dans lequel ces électrodes sont immergées, la cellule comprenant au moins deux collecteurs de courant supérieur et inférieur respectivement recouverts de ces électrodes supérieures et inférieures, l'une au moins de ces électrodes étant telle que définie ci-dessus en référence à la présente invention.

Selon un mode préférentiel de réalisation de l'invention, cet électrolyte est à base d'au moins un acide ou sel en milieu aqueux, par exemple de l'acide sulfurique.

D'autres caractéristiques, avantages et détails de la présente invention ressortiront à la lecture de la description suivante de plusieurs exemples de réalisation de l'invention, donnés à titre illustratif et non limitatif.

**Exemples 1-4 de préparation en milieu aqueux et de mise en oeuvre d'une composition carbonée d'électrode selon l'invention** :

On a obtenu de la poudre de carbone dite « C1 » par broyage dans un broyeur à billes pendant 3 minutes à 500 tours/minute, à partir d'un morceau préparé selon la méthode décrite dans le document WO-A1-2009/125094 au nom de la Demanderesse.

On a ensuite préparé différents mélanges dans de l'eau à l'aide d'un broyeur à bille selon les compositions suivantes, à partir de noir de carbone « Super PLi » (Timcal™) d'un alcool polyvinylique « Mowiol™ 18-88 » (PVA), d'un acide poly(acrylique) (PAA), et de carboxyméthylcellulose (CMC). On a ajouté 0,05 % en masse d'un anti-bulles « BYK 24™ ». Le PAA permet de catalyser la réticulation du PVA et de la CMC par déshydratation.

Tableau 1 : Formulations de ces compositions pour la préparation d'électrodes en milieu aqueux (fractions massiques) :

|  | Exemple 1 | Exemple 2 | Exemple 3 | Exemple 4 |
|---|---|---|---|---|
| Carbone C1 | 84,2 % | 84,5 % | 81,9 % | 81,9 % |
| Noir de carbone Super-PLi | 10,5 % | 10,6 % | 10,2 % | 10,2 % |
| PVA | 4,5 % | 4,5 % | 7,2 % | 6,4 % |
| PAA | 0,5 % | 0,45 % | 0,7 % | 1,5 % |
| CMC | 0,3 % |  |  |  |
| Taux de solide | 40 % | 40 % | 40 % | 40% |

On a ensuite enduit les dispersions obtenues avec ces compositions sur un feuillard d'acier inoxydable de 20 $\mu$m d'épaisseur à l'aide d'une racle d'ouverture bien définie. Après évaporation de l'eau à 40° C, on a obtenu une épaisseur sèche d'environ 300 $\mu$m pour chaque électrode. On a ensuite réticulé ces électrodes à 140° C pendant 30 minutes.

**Exemples comparatifs 1-2 non conformes à l'invention** :

On a préparé les deux compositions suivantes dans des conditions similaires à celles des exemples 1-4.

Tableau 2 : Formulations de ces compositions pour la préparation d'électrodes en milieu aqueux (fractions massiques) :

|  | Exemple comparatif 1 | Exemple comparatif 2 |
|---|---|---|
| Carbone C1 | 80 % | 80 % |
| Noir de carbone Super-PLi | 10 % | 10 % |
| PVA | 10 % | 10 % |
| Acide citrique | 0,2 % |  |
| $H_2SO_4$ 1M |  | 0,2 % |
| Taux de solide | 33 % | 43 % |

On a mis en oeuvre par enduction, évaporation puis réticulation les compositions obtenues dans des conditions similaires à celles des exemples 1-4, à ceci près que dans ces exemples comparatifs la réticulation du PVA n'est pas catalysée par le PAA mais par l'acide citrique ou par l'acide sulfurique, selon le cas.

**Exemples comparatifs 3-5 non conformes à l'invention :**

On a préparé les trois compositions suivantes dans des conditions similaires à celles des exemples 1-4.

Tableau 3 : Formulations de ces compositions pour la préparation d'électrodes en milieu aqueux (fractions massiques) :

| | Exemple comparatif 3 | Exemple comparatif 4 | Exemple comparatif 5 |
|---|---|---|---|
| Carbone C1 | 81,1 % | 85,1 % | 80 % |
| Noir de carbone Super-PLi | 10,1 % | 10,5 % | 10 % |
| PAA | 8,8 % | | |
| CMC | | 4,3 % | |
| Acide citrique | | 0,1 % | |
| HEC (hydroxyéthyl cellulose) | | | 10 % |
| Taux de solide | 20 % | 20 % | 35 % |

On a mis en oeuvre par enduction, évaporation puis réticulation les compositions obtenues dans des conditions similaires à celles des exemples 1-4.

**Exemple comparatif 6 non conforme à l'invention :**

On a préparé la composition suivante dans des conditions similaires à celles des exemples 1-4, mais en utilisant à titre de liant le poly(difluorure de vinyl) (PVDF) dans un solvant organique, la N-méthyl pyrrolidinone (NMP).

Tableau 4 : Formulation de cette composition pour la préparation d'une électrode dans un solvant organique (fractions massiques) :

| | Exemple comparatif 6 |
|---|---|
| Carbone C1 | 80 % |
| Noir de carbone Super-PLi | 10 % |
| PVDF | 10 % |
| Taux de solide | 40 % |

On a ensuite enduit les dispersions obtenues avec ces compositions sur un feuillard d'acier inoxydable de 20 $\mu$m d'épaisseur à l'aide d'une racle d'ouverture bien définie. Après évaporation de la NMP à 60° C, on a obtenu une épaisseur sèche d'électrode d'environ 300 $\mu$m.

**Performances obtenues pour les électrodes selon les exemples 1-4 de l'invention et les exemples comparatifs 1-6 :**

On a caractérisé la capacité des électrodes par voie électrochimique. On a évalué leur tenue mécanique (fissuration) une fois ces électrodes remplies d'électrolyte aqueux, puis après cyclage électrochimique. Le dispositif testé et les tests électrochimiques utilisés étaient les suivants.

On a placé en série deux électrodes identiques isolées par un séparateur, au sein d'une cellule de mesure de supercondensateur contenant l'électrolyte aqueux à base d'acide sulfurique ($H_2SO_4$ 1M) et pilotée par un potentiostat/galvanostat « Bio-Logic VMP3 » via une interface à trois électrodes. Une première électrode correspondait à l'électrode de travail et la seconde électrode constituait à la fois la contre-électrode et la référence.

• Mesure de la capacité spécifique moyenne :

On a soumis le dispositif à des cycles de charge-décharge à un courant constant I de 0,2 A/g de l'électrode de travail.

Le potentiel évoluant de façon linéaire avec la charge véhiculée, on a déduit la capacité C du système supercapacitif des pentes p à la charge et à la décharge (sachant que C = I/p). Le système étant symétrique en terme de masses ($m_1=m_2=m$), on a défini la capacité spécifique moyenne $C_{spé}$ par : $C_{spé}= 2*C/m$.

• Cycles de charge-décharge :

La cellule est soumise à 1000 cycles de charge-décharge à courant constant de 1A/g de l'électrode de travail.

Les performances des différentes électrodes sont répertoriées dans le tableau suivant, étant précisé que les tests d'adhésion et de tenue mécanique qui ont utilisé un collecteur en acier inoxydable constitué du feuillard précité rendent compte des résultats obtenus de manière relative par des + et des - (i.e. adhésion et tenue respectivement satisfaisantes et déficientes).

Tableau 5 : Performances des électrodes dans $H_7SO_4$ 1M :

| Propriété | Ex 1 | Ex 2 | Ex 3 | Ex 4 | Ex C1 | Ex C2 | Ex C3 | Ex C4 | Ex C5 | Ex C6 |
|---|---|---|---|---|---|---|---|---|---|---|
| Capacité spécifique (F/g) | 85 | 79 | 76 | 69 | 69 | 65 | 50 | 56 | Non mesu-rable | 49 |
| Fissuration après remplissage | Non | Non | Non | Non | Non | Oui | Oui | Non | Oui | Non |
| Adhésion sur le collecteur après remplissage | + | + | + | + | - | - | - | - | - | - |
| Tenue après 1000 cycles de charge et décharge | + | + | + | + | + | + | - | - | Non mesu-rable | + |

Comme visible dans ce tableau 5, les performances capacitives optimales sont observées pour des électrodes selon l'invention mises en oeuvre dans l'eau (exemples 1 à 4) avec un système formant liant comprenant de l'alcool polyvinylique et optionnellement en outre de la carboxyméthylcellulose (voir l'exemple 1 préférentiel avec la capacité maximale) qui est réticulé en présence d'acide polyacrylique. En effet, les électrodes obtenues selon ces quatre exemples de l'invention présentent une capacité spécifique égale ou supérieure à 69 F/g, avantageusement supérieure à 75 F/g et encore plus avantageusement égale à 85 F/g.

De plus, ces quatre électrodes selon l'invention présentent une bonne adhésion sur le collecteur métallique en acier inoxydable et permettent de contrôler le gonflement du système liant hydrophile en présence de l'électrolyte aqueux. Ainsi, l'on n'a pas observé la moindre fissuration des électrodes selon l'invention après remplissage et cyclage.

Ce tableau 5 montre également que pour l'électrode de l'exemple comparatif 1, une réticulation de l'alcool polyvinylique en présence d'un acide de faible poids moléculaire et de pKa proche (i.e. l'acide citrique) ne permet pas d'obtenir une bonne adhésion de cette électrode sur le collecteur après remplissage par l'électrolyte aqueux à base d'acide sulfurique.

Ce tableau 5 montre aussi que pour l'électrode de l'exemple comparatif 2, une réticulation catalysée par un acide de pKa plus faible (i.e. $H_2SO_4$ 1M) ne permet pas d'empêcher la fissuration de cette électrode après remplissage.

On notera en outre que les autres liants testés aux exemples comparatifs 3 à 5 confèrent aux électrodes correspondantes des capacités plus faibles et une tenue mécanique réduite à l'électrolyte aqueux utilisé.

On notera enfin que l'utilisation d'un liant hydrophobe, tel que le PVDF, ne permet pas d'obtenir une capacité spécifique élevée pour l'électrode l'incorporant (voir exemple comparatif 6).

**Revendications**

1. Composition carbonée utilisable pour constituer une électrode de supercondensateur en contact avec un électrolyte ionique aqueux, la composition étant à base d'une poudre carbonée apte à stocker et à restituer de l'énergie électrique et comprenant un système formant liant hydrophile, **caractérisée en ce que** ledit système comprend :

   - selon une fraction massique dans la composition comprise entre 3 % et 10 %, au moins un premier polymère réticulé de masse moléculaire moyenne en nombre Mn supérieure à 1000 g/mol et comprenant des groupements alcools, et
   - selon une fraction massique dans la composition comprise entre 0,3 % et 3 %, au moins un second polymère d'au moins un acide et qui présente un pKa compris entre 0 et 6 et une masse moléculaire moyenne en nombre Mn supérieure à 500 g/mol,

   ledit au moins un premier polymère étant réticulé à chaud en présence dudit au moins un second polymère.

**2.** Composition selon la revendication 1, **caractérisée en ce que** ledit au moins un premier polymère présente une masse moléculaire moyenne en nombre Mn supérieure à 10000 g/mol et est un polymère d'un ester au moins partiellement hydrolysé de type poly(vinyl acétate).

**3.** Composition selon la revendication 1, **caractérisée en ce que** le(s)dit(s) premier(s) polymère(s) est (sont) choisi(s) dans le groupe constitué par les alcools polyvinyliques (PVA), les poly(hydroxyéthyl acrylate), les poly(hydroxyéthyl méthacrylate) et leurs mélanges.

**4.** Composition selon une des revendications précédentes, **caractérisée en ce que** le(s)dit(s) premier(s) polymère(s) est (sont) présent(s) dans la composition selon une fraction massique comprise entre 4 et 8 %.

**5.** Composition selon une des revendications précédentes, **caractérisée en ce que** le(s)dit(s) acide(s) est (sont) choisi(s) dans le groupe constitué par les acides carboxyliques, sulfoniques et phosphoniques et leurs mélanges, ledit au moins un second polymère présentant un pKa compris entre 2 et 5 et une masse moléculaire moyenne en nombre Mn supérieure à 2000 g/mol.

**6.** Composition selon la revendication 5, **caractérisée en ce que** le(s)dit(s) second(s) polymère(s) est (sont) choisi(s) dans le groupe constitué par les poly(acide acrylique), les poly(acide méthacrylique), les poly(styrène-acide sulfonique), les poly(2-acrylamido-2méthyl-1propane acide sulfonique), les copolymères(éthylène-acide maléique), les copolymères(styrène-acide maléique), les copolymères(acide styrène-sulfonique - acide maléique), les poly(acide hydroxybutyrique), les poly(vinyl-acide sulfonique), les poly(vinyl-acide phosphonique) et leurs mélanges.

**7.** Composition selon une des revendications précédentes, **caractérisée en ce que** le(s)dit(s) second(s) polymère(s) est (sont) présent(s) dans la composition selon une fraction massique comprise entre 0,4 et 2 %.

**8.** Composition selon une des revendications précédentes, **caractérisée en ce que** ledit système formant liant comprend en combinaison un alcool polyvinylique à titre de premier polymère et un poly(acide acrylique) à titre de second polymère.

**9.** Composition selon une des revendications précédentes, **caractérisée en ce que** ledit système formant liant comprend en outre un dérivé cellulosique de masse moléculaire moyenne en nombre Mn supérieure à 10000 g/mol et/ou un sel de l'acide alginique, présent(s) dans la composition selon une fraction massique comprise entre 0,1 et 1 %, de préférence comprise entre 0,2 et 0,5 %, et de préférence **en ce que** ce système formant liant comprend de la carboxyméthylcellulose à titre de dérivé cellulosique et/ou un alginate de sodium à titre de sel de l'acide alginique.

**10.** Composition selon une des revendications précédentes, **caractérisée en ce que** ladite poudre carbonée comprend :

- selon une fraction massique dans la composition comprise entre 80 et 86 %, au moins un carbone broyé de surface spécifique égale ou supérieure à 100 $m^2$/g et de préférence comprise entre 200 et 2000 $m^2$/g, et
- selon une fraction massique dans la composition comprise entre 10 et 11 %, au moins un noir de carbone de surface spécifique inférieure ou égale à 100 $m^2$/g par exemple de dénomination « Super-PLi » ou du carbone actif sous une autre forme, pour améliorer la conductivité électrique de la poudre carbonée.

**11.** Electrode poreuse utilisable pour équiper une cellule de supercondensateur en étant immergée dans un électrolyte ionique aqueux, **caractérisée en ce que** l'électrode est constituée d'une composition selon une des revendications précédentes et recouvre un collecteur de courant métallique équipant l'électrode, laquelle électrode présente une épaisseur de préférence comprise entre 200 $\mu$m et 400 $\mu$m.

**12.** Procédé de fabrication d'une électrode selon la revendication 11, **caractérisé en ce qu'**il comprend essentiellement :

a) une dispersion dans de l'eau de ladite poudre carbonée et dudit système formant liant qui comprend ledit au moins un premier polymère non réticulé et ledit au moins un second polymère,
b) une enduction de la dispersion obtenue sur un feuillard métallique formant ledit collecteur,
c) une évaporation de l'eau contenue dans cette dispersion, de préférence à une température comprise entre 35 et 45 ° C, puis
d) une réticulation à chaud dudit au moins un premier polymère qui est catalysée par ledit au moins un second polymère et qui est de préférence réalisée à une température comprise entre 130 et 150° C.

**13.** Procédé selon la revendication 12, **caractérisé en ce que** le taux massique de matière solide dans la dispersion de l'étape a) est compris entre 35 et 45 %, et **en ce que** l'on utilise pour cette dispersion un alcool polyvinylique à titre de premier polymère et un poly(acide acrylique) à titre de second polymère.

**14.** Procédé selon la revendication 12 ou 13, **caractérisé en ce que** l'on disperse en outre dans l'eau à l'étape a) un dérivé cellulosique de masse moléculaire moyenne en nombre Mn supérieure à 10000 g/mol, de préférence de la carboxyméthylcellulose, et/ou un sel de l'acide alginique, de préférence un alginate de sodium, ce dérivé cellulosique et/ou ce sel étant également réticulé(s) à chaud à l'étape d) en présence dudit au moins un second polymère.

**15.** Cellule de supercondensateur comprenant au moins deux électrodes poreuses supérieure et inférieure, une membrane électriquement isolante séparant ces électrodes l'une de l'autre et un électrolyte ionique dans lequel ces électrodes sont immergées, la cellule comprenant au moins deux collecteurs de courant supérieur et inférieur respectivement recouverts de ces électrodes supérieures et inférieures, **caractérisée en ce que** l'une au moins de ces électrodes est telle que définie à la revendication 11, et de préférence **en ce que** ledit électrolyte est à base d'au moins un acide ou sel en milieu aqueux, par exemple de l'acide sulfurique.

**Patentansprüche**

**1.** Kohlenstoffzusammensetzung, welche dazu verwendet werden kann, eine Superkondensator-Elektrode zu bilden, die in Kontakt mit einem wässrigen ionischen Elektrolyt ist, wobei die Zusammensetzung auf einem Kohlenstoffpulver basiert, welches elektrische Energie speichern und wiederherstellen kann und ein System umfasst, das ein hydrophiles Bindemittel bildet, **dadurch gekennzeichnet, dass** das System umfasst:

- in einem Massenanteil zwischen 3% und 10% in der Zusammensetzung wenigstens ein erstes vernetztes Polymer mit einem zahlengemittelten Molekulargewicht Mn größer 1000 g/mol, welches Alkoholgruppen umfasst, und
- in einem Massenanteil zwischen 0,3% und 3% in der Zusammensetzung wenigstens ein zweites Polymer wenigstens einer Säure, mit einem pKa zwischen 0 und 6 und einem zahlengemittelten Molekulargewicht Mn größer 500 g/mol,

wobei das wenigstens eine erste Polymer in Anwesenheit des wenigstens einen zweiten Polymers durch Wärme vernetzt ist.

**2.** Zusammensetzung nach Anspruch 1, **dadurch gekennzeichnet, dass** das wenigstens eine erste Polymer ein zahlengemitteltes Molekulargewicht Mn größer 10000 g/mol aufweist und ein Polymer eines wenigstens teilweise hydrolysierten Esters vom Typ Poly(vinylacetat) ist.

**3.** Zusammensetzung nach Anspruch 1, **dadurch gekennzeichnet, dass** das erste Polymer/die ersten Polymere gewählt ist/sind aus der Gruppe, umfassend Polyvinylalkohol (PVA), Poly(hydroxyethylacrylat), Poly(hydroxyethylmetracrylat) und deren Mischungen.

**4.** Zusammensetzung nach einem der vorhergehenden Ansprüche, **dadurch gekennzeichnet, dass** das erste Polymer/die ersten Polymere in der Zusammensetzung in einem Massenanteil zwischen 4 und 8% vorliegen.

**5.** Zusammensetzung nach einem der vorhergehenden Ansprüche, **dadurch gekennzeichnet, dass** die Säure/die Säuren gewählt ist/sind aus der Gruppe, umfassend Carbonsäuren, Sulfonsäuren, Phosphonsäuren und deren Mischungen, wobei das wenigstens eine zweite Polymer einen pKa zwischen 2 und 5 und ein zahlengemitteltes Molekulargewicht Mn größer 2000 g/mol aufweist.

**6.** Zusammensetzung nach Anspruch 5, **dadurch gekennzeichnet, dass** das zweite Polymer/die zweiten Polymere gewählt ist/sind aus der Gruppe, umfassend Polyacrylsäuren, Polymethacrylsäuren, Polystyrolsulfonsäuren, Poly(2-acrylamid-2methyl-1propan-Sulfonsäuren), Ethylen-Maleinsäure-Copolymere, Styrol-Maleinsäure-Copolymere, Styrol-Sulfon-Maleinsäure-Copolymere, Polyhydroxybuttersäuren, Polyvinylsulfonsäuren, Polyvinylphosphorsäuren und deren Mischungen.

**7.** Zusammensetzung nach einem der vorhergehenden Ansprüche, **dadurch gekennzeichnet, dass** das zweite Polymer/die zweiten Polymere in der Zusammensetzung in einem Massenanteil zwischen 0,4 und 2% vorliegen.

**8.** Zusammensetzung nach einem der vorhergehenden Ansprüche, **dadurch gekennzeichnet, dass** das ein Bindemittel bildende System in Kombination einen Polyvinylalkohol als erstes Polymer und eine Polyacrylsäure als zweites Polymer umfasst.

**9.** Zusammensetzung nach einem der vorhergehenden Ansprüche, **dadurch gekennzeichnet, dass** das ein Bindemittel bildende System ferner ein Cellulosederivat mit einem zahlengemittelten Molekulargewicht Mn größer 10000 g/mol und/oder ein Alginsäuresalz umfasst, welches/welche in der Zusammensetzung in einem Massenanteil zwischen 0,1 und 1% vorliegt/vorliegen, bevorzugt zwischen 0,2 und 0,5 %, und dass bevorzugt das ein Bindemittel bildende System Carboxylmethylcellulose als Cellulosederivat und/oder Natriumalginat als Alginsäuresalz umfasst.

**10.** Zusammensetzung nach einem der vorhergehenden Ansprüche, **dadurch gekennzeichnet, dass** das Kohlenstoffpulver umfasst:

- in einem Massenanteil zwischen 80 und 86 % in der Zusammensetzung wenigstens einen gemahlenen Kohlenstoff mit einer spezifischen Oberfläche größer gleich 100 m$^2$/g und bevorzugt zwischen 200 und 2000 m$^2$/g, und
- in einem Massenanteil zwischen 10 und 11 % in der Zusammensetzung wenigstens ein Rußschwarz mit einer spezifischen Oberfläche kleiner gleich 100 m$^2$/g, beispielsweise 'Super-Pli' oder Aktivkohle in einer anderen Form zur Verbesserung der elektrischen Leitfähigkeit des Karbonpulvers.

**11.** Poröse Elektrode, welche dazu verwendet werden kann, eine Superkondensatorzelle durch Eintauchen in einen wässrigen ionischen Elektrolyten auszurüsten, **dadurch gekennzeichnet, dass** die Elektrode aus einer Zusammensetzung nach einem der vorhergehenden Ansprüche gebildet ist und einen die Elektrode ausrüstenden metallischen elektrischen Stromkollektor bedeckt, wobei die Elektrode bevorzugt eine Dicke zwischen 200 $\mu$m und 400 $\mu$m aufweist.

**12.** Herstellungsverfahren für eine Elektrode nach Anspruch 11, **dadurch gekennzeichnet, dass** es im Wesentlichen umfasst:

a) Dispergieren in Wasser des Kohlenstoffpulvers und des ein Bindemittel bildenden Systems, umfassend das wenigstens eine erste nicht vernetzte Polymer und das wenigstens eine zweite Polymer,
b) Aufbringen der erhaltenen Dispersion auf ein den Kollektor bildendes Metallband,
c) Verdampfen des in dieser Dispersion enthaltenen Wassers, bevorzugt bei einer Temperatur zwischen 35 und 45°C, dann
d) Vernetzung durch Wärme des wenigstens einen ersten Polymers, katalysiert durch das wenigstens eine zweite Polymer und bevorzugt durchgeführt bei einer Temperatur zwischen 130 und 150 °C.

**13.** Verfahren nach Anspruch 12, **dadurch gekennzeichnet, dass** der Feststoff-Massenanteil in der Dispersion aus Schritt a) zwischen 35 und 45 % liegt und dass für diese Dispersion ein Polyvinylalkohol als erstes Polymer und eine Polyacrylsäure als zweites Polymer verwendet wird.

**14.** Verfahren nach Anspruch 12 oder 13, **dadurch gekennzeichnet, dass** ferner in Schritt a) ein Cellulosederivat mit einem zahlengemittelten Molekulargewicht Mn größer 10000 g/mol in Wasser dispergiert wird, bevorzugt Carboxymethylcellulose, und oder ein Alginsäuresalz, bevorzugt ein Natriumalginat, wobei das Cellulosederivat und/oder das Salz in Schritt d) in Anwesenheit des wenigstens einen zweiten Polymers ebenfalls bei Wärme vernetzt werden.

**15.** Superkondensatorzelle, welche wenigstens zwei obere und untere poröse Elektroden, eine elektrisch isolierende Membran, welche diese Elektroden voneinander trennt und einen ionischen Elektrolyten umfasst, in den die Elektroden eingetaucht werden, wobei die Zelle wenigstens zwei obere und untere Stromkollektoren umfasst, die jeweils mit diesen oberen und unteren Elektroden bedeckt sind, **dadurch gekennzeichnet, dass** wenigstens eine dieser Elektroden derart vorliegt wie in Anspruch 11 beschrieben, und dass bevorzugt der Elektrolyt auf wenigstens einer Säure oder einem Salz in wässrigem Milieu basiert, beispielsweise Schwefelsäure.

**Claims**

**1.** Carbonaceous composition usable to constitute a supercapacitor electrode in contact with an aqueous ionic electrolyte, the composition being based on a carbonaceous powder capable of storing and releasing electrical energy and comprising a hydrophilic binder-forming system, **characterized in that** said system comprises:

- according to a weight fraction in the composition of between 3% and 10%, at least one first crosslinked polymer having a number-average molecular weight Mn of greater than 1000 g/mol and comprising alcohol groups, and
- according to a weight fraction in the composition of between 0.3% and 3%, at least one second polymer of at least one acid and which has a pKa of between 0 and 6 and a number-average molecular weight Mn of greater than 500 g/mol,

said at least one first polymer being crosslinked thermally in the presence of said at least one second polymer.

2. Composition according to Claim 1, **characterized in that** said at least one first polymer has a number-average molecular weight Mn of greater than 10 000 g/mol and is a polymer of an at least partially hydrolyzed ester of poly(vinyl acetate) type.

3. Composition according to Claim 1, **characterized in that** said first polymer(s) is (are) selected from the group consisting of polyvinyl alcohols (PVAs), poly(hydroxyethyl acrylate)s, poly(hydroxyethyl methacrylate)s and mixtures thereof.

4. Composition according to one of the preceding claims, **characterized in that** said first polymer(s) is (are) present in the composition according to a weight fraction of between 4% and 8%.

5. Composition according to one of the preceding claims, **characterized in that** said acid(s) is (are) selected from the group consisting of carboxylic acids, sulfonic acids, phosphonic acids and mixtures thereof, said at least one second polymer having a pKa of between 2 and 5 and a number-average molecular weight Mn of greater than 2000 g/mol.

6. Composition according to Claim 5, **characterized in that** said second polymer(s) is (are) selected from the group consisting of poly(acrylic acid)s, poly(methacrylic acid)s, poly(styrene-sulfonic acid)s, poly(2-acrylamido-2-methyl-1-propanesulfonic acid)s, ethylene/maleic acid copolymers, styrene/maleic acid copolymers, styrene-sulfonic acid/maleic acid copolymers, poly(hydroxybutyric acid)s, poly(vinyl-sulfonic acid)s, poly(vinylphosphonic acid)s and mixtures thereof.

7. Composition according to one of the preceding claims, **characterized in that** said second polymer(s) is (are) present in the composition according to a weight fraction of between 0.4% and 2%.

8. Composition according to one of the preceding claims, **characterized in that** said binder-forming system comprises, in combination, a polyvinyl alcohol as first polymer and a poly(acrylic acid) as second polymer.

9. Composition according to one of the preceding claims, **characterized in that** said binder-forming system additionally comprises a cellulose derivative having a number-average molecular weight Mn of greater than 10 000 g/mol and/or a salt of alginic acid, which is (are) present in the composition according to a weight fraction of between 0.1% and 1%, preferably of between 0.2% and 0.5%, and preferably **in that** this binder-forming system comprises carboxymethyl cellulose as cellulose derivative and/or a sodium alginate as salt of alginic acid.

10. Composition according to one of the preceding claims, **characterized in that** said carbonaceous powder comprises:

- according to a weight fraction in the composition of between 80% and 86%, at least one milled carbon having a specific surface area greater than or equal to 100 $m^2$/g and preferably between 200 and 2000 $m^2$/g, and
- according to a weight fraction in the composition of between 10% and 11%, at least one carbon black having a specific surface area less than or equal to 100 $m^2$/g for example of the "Super-PLi" name or active carbon in another form, in order to improve the electrical conductivity of the carbonaceous powder.

11. Porous electrode usable to equip a supercapacitor cell by being submerged in an aqueous ionic electrolyte, **characterized in that** the electrode consists of a composition according to one of the preceding claims and covers a metallic current collector equipping the electrode, which electrode has a thickness preferably of between 200 μm and 400 μm.

12. Process for manufacturing an electrode according to Claim 11, **characterized in that** it essentially comprises:

a) a dispersion in water of said carbonaceous powder and of said binder-forming system which comprises said at least one first uncrosslinked polymer and said at least one second polymer,

b) coating of the dispersion obtained onto a metal sheet forming said collector,

c) evaporation of the water contained in this dispersion, preferably at a temperature between 35°C and 45°C, then

d) thermal crosslinking of said at least one first polymer which is catalyzed by said at least one second polymer and which is preferably carried out at a temperature between 130°C and 150°C.

13. Process according to Claim 12, **characterized in that** the weight content of solid material in the dispersion of step a) is between 35% and 45%, and **in that** use is made, for this dispersion, of a polyvinyl alcohol as first polymer and a poly(acrylic acid) as second polymer.

14. Process according to Claim 12 or 13, **characterized in that** additionally dispersed in water in step a) is a cellulose derivative having a number-average molecular weight Mn of greater than 10 000 g/mol, preferably carboxymethyl cellulose, and/or a salt of alginic acid, preferably a sodium alginate, this cellulose derivative and/or this salt also being crosslinked thermally in step d) in the presence of said at least one second polymer.

15. Supercapacitor cell comprising at least two top and bottom porous electrodes, an electrically insulating membrane separating these electrodes from one another and an ionic electrolyte in which these electrodes are submerged, the cell comprising at least two top and bottom current collectors respectively covered with these top and bottom electrodes, **characterized in that** at least one of these electrodes is as defined in Claim 11, and preferably **in that** said electrolyte is based on at least one acid or salt in an aqueous medium, for example sulfuric acid.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20070146967 A1
- US 7811337 B2
- EP 1255261 A1
- US 20060000071 A1
- US 7316864 B2
- US 20110176255 A1
- US 20090110806 A1
- US 6356432 B1
- US 20100304270 A1
- JP 11162794 A
- US 20090325069 A1
- JP 2010123842 B
- JP 2010171211 B
- WO 2009125094 A1